# EUROPEAN PATENT APPLICATION

(11) **EP 3 907 796 A1**
(43) Date of publication of application: **10.11.2021**
(21) Application number: 20864325.4
(22) Date of filing: 09.03.2020
(51) Int. Cl.: H01M 4/64

(54) **CELL AND BATTERY HAVING SAID CELL**

(71) Applicant: Ningde Amperex Technology Ltd., Ningde City, Fujian 352100 (CN)
(72) Inventor: YAN, Dongyang, Ningde Fujian 350900 (CN); HUANG, Rui, Ningde Fujian 350900 (CN); XIAO, Liangzhen, Ningde Fujian 350900 (CN)
(74) Representative: Icosa
(86) International application number: PCT/CN2020/078449
(87) International publication number: WO 2021/179129

(57) **Abstract**

The cell includes an electrode assembly, a package that receives the electrode assembly and an electrolyte solution, the electrolyte solution is received into the package, and the electrode assembly is formed by sequential winding or stacking of a cathode plate, a separator and an anode plate; the cell includes a first sealed edge, a part of electrode assembly penetrates through the first sealed edge, and the cathode plate includes a first current collector and a first active substance layer. A thickness a of the first current collector satisfies the following formula: 0.02T/(L+2)≤a≤0.06T/L+b×S/1000; wherein T is a thickness of the cell, b is a content of the free electrolyte solution, S is an encapsulation of the first sealed edge, and L is a number of layers of the electrode assembly. The application further provides a battery with the cell.

## Description

### Field

The application relates to the field of electrochemistry, in particular to a cell and a battery with the same.

### Background

With the increasing demand for cell capacity, cell weight and volume have increased to meet the user demand, and thus the leakage, damage and fire of the cell during the drop have also increased greatly. Besides, under the condition that a product built-in with the cell drops from height during use, even if a protective shell of the product is not damaged, its built-in cell may be damaged, even fired and exploded in severe cases, which will endanger the user safety. With respect to the safety of the cell during the drop, the conventional solution is to improve the thickness and strength of the outer packaging film of the cell, so as to improve the outside wear and fatigue resistant life of the cell. However, the drawbacks of this solution include damaging the space utilization of the cell and lowering the energy density of the cell.

### Summary

In view of this, it is a necessary to provide a cell to solve the aforesaid problems.

The embodiments of the application provide a cell, including an electrode assembly, a package that receives the electrode assembly and an electrolyte solution, wherein the electrolyte solution is received into the package, the electrode assembly is formed by sequential winding or stacking of a cathode plate, a separator and an anode plate; the cell includes a first sealed edge, a part of the electrode assembly penetrates through the first sealed edge, and the cathode plate includes a first current collector and a first active substance layer arranged on the first current collector; the anode plate, the cathode plate adjacent to the anode plate and two layers of the separator adjacent to the anode plate or the cathode plate are defined as one layer of the electrode assembly; a thickness a (in mm) of the first current collector satisfies the following formula: 0.02T/(L+2)≤a≤0.06T/L+b×S/1000, which is calculated by the numerical values of various parameters;
where, T is a thickness of the cell (in mm), b is a content of the free electrolyte solution (in g/Ah), S is an encapsulation strength of the first sealed edge (in N/m), and L is a number of layers of the electrode assembly.

In some embodiments, a thickness of the cell is 1 mm~12 mm.

In some embodiments, a thickness of the first current collector is 0.005 mm ~ 0.03 mm.

In some embodiments, a content of the free electrolyte solution is 0.05 g/Ah ~ 1.6 g/Ah.

In some embodiments, an encapsulation strength of the first sealed edge is 0.5 N/m ~ 20 N/m.

In some embodiments, a transverse strength of the first current collector is 50 MPa ~ 300 MPa.

In some embodiments, a longitudinal strength of the first current collector is 50 MPa ~ 300 MPa.

In some embodiments, an adhesive force between the separator and the anode plate is 0.5 N/m ~ 40 N/m.

In some embodiments, an adhesive force between the separator and the cathode plate is 0.5 N/m ~ 80 N/m.

In some embodiments, the first current collector includes one or more of elements, including Al, Ni, Mn, Cr, Cu, Fe, Mg, Si, Ti, Zr, V, Zn, Pb, S, P, Sn, As, Bi and Sb.

In some embodiments, the first active substance layer includes a first active substance and a first adhesive agent, a mass fraction of the first active substance is 96% ~ 99%, and a mass fraction of the first adhesive agent is 0.5% ~ 2%.

In some embodiments, the first adhesive agent includes one or more of copolymers of polyethylene oxide, polyvinylidene fluoride, butadiene styrene rubber, vinylidene difluoride and hexafluoropropylene

In some embodiments, monomer products, produced from a test for the first adhesive agent by a pyrolysis gas chromatography mass spectroscopy (PY-GCMS), include one or more of butadiene, acrylonitrile, styrene, methyl methacrylate, butyl acrylate, vinyl pyrrolidone, ethylhexyl methacrylate, iso-octyl acrylate, polyvinylidene fluoride(PVDF), 9-octadecenenitrile, propyl propionate, ethyl propionate, polyacrylic acid (PAA), N-methylpyrrolidone and 4-phenylcyclohexanone.

In some embodiments, the first active substance layer further includes a conductive agent, a mass fraction of which is 0.5% ~ 2%.

In some embodiments, the conductive agent includes one or more of acetylene black, carbon black, conductive carbon black (Super P), Ketj en black, single-walled carbon nanotube, multi-walled carbon nanotube, carbon nanofiber and graphene.

In some embodiments, the anode plate includes a second current collector and a second active substance layer arranged on the second current collector. The second active substance layer includes a second active substance and a second adhesive agent, a mass fraction of the second active substance is 97% ~ 99%, and a mass fraction of the second adhesive agent is 0.5% ~ 1.5%.

In some embodiments, monomer products, produced from a test for the second adhesive agent by a pyrolysis gas chromatography mass spectroscopy (PY-GCMS), include one or more of butadiene, acrylonitrile, styrene, methyl methacrylate, butyl acrylate, vinyl pyrrolidone, ethylhexyl methacrylate, iso-octyl acrylate, polyvinylidene fluoride, 9-octadecenenitrile, propyl propionate, ethyl propionate, polyacrylic acid (PAA), N-methylpyrrolidone and 4-phenylcyclohexanone.

In some embodiments, the separator includes one or more of polyethylene, polypropylene, polyvinylidene fluoride, modified polyvinylidene fluoride, polyacrylate, modified polyacrylate, modified polyethylene and modified polypropylene.

The embodiments of the application further provide a battery, the battery includes a shell and the aforesaid cell, the cell is received into the shell.

In conclusion, the damage to the cell caused by reverse scouring of the electrolyte solution is reduced by defining the content b of the free electrolyte solution. Meanwhile, the thickness a of the first current collector is defined in conjunction with the thickness T of the cell, the number L of layers of the electrode assembly and the encapsulation strength S of the first sealed edge, so that b, T, L, S and a satisfy a certain relational expression, thereby ensuring a complete structure of the cell during the drop, and thus effectively preventing the leakage, short circuit and fire of the cell due to the drop and impact, and improving the using safety of the cell.

### Brief Description of the Figures

Fig. 1 is an internal structure diagram of a cell of one embodiment of the application.
Fig. 2 is a cross-sectional schematic view of a cell of one embodiment of the application.
Fig. 3 is a cross-sectional schematic view of a cell of another embodiment of the application.
Fig. 4 is a cross-sectional schematic view of a cell shown in Fig. 1.
Fig. 5 is a schematic diagram of a cell during the drop shown in Fig. 1.
Fig. 6 is a partial structural diagram of a cell shown in Fig. 1.

**Description of Reference Signs of Main Elements**

| | |
|---|---|
| Cell | 10 |
| Electrode assembly | 11 |
| Cathode plate | 111 |
| First current collector | 1111 |
| First active substance layer | 1112 |
| Separator | 112 |
| Anode plate | 113 |
| Second current collector | 1131 |
| Second active substance layer | 1132 |
| Cathode tab | 114 |
| Anode tab | 115 |
| Package | 12 |
| Electrolyte solution | 13 |
| Adhesive member | 14 |
| First sealed edge | 15 |
| Ground | 200 |

The application will be further described in the following detailed description of the embodiments with reference to the above drawings.

### Detailed Description of the Embodiments

The technical solutions in the embodiments of the application will be clearly and completely described below in conjunction with the drawings in the embodiments of the application. Obviously, the described embodiments are only some, not all of the embodiments of the application. Based on the embodiments herein, all other embodiments obtained by those of ordinary skill in the art without any creative work also fall into the protection scope of the application.

Unless otherwise defined, all technical and scientific terms used herein have the same meaning as those generally understood by those skilled in the art belonging to the technical field of the application. All terms used in the Description of the application only aim to describe the specific embodiments and are not intended to limit the application.

Some embodiments of the application are elaborated in conjunction with the accompanying drawings. Without conflict, the following embodiments and features in these embodiments can be combined with each other.

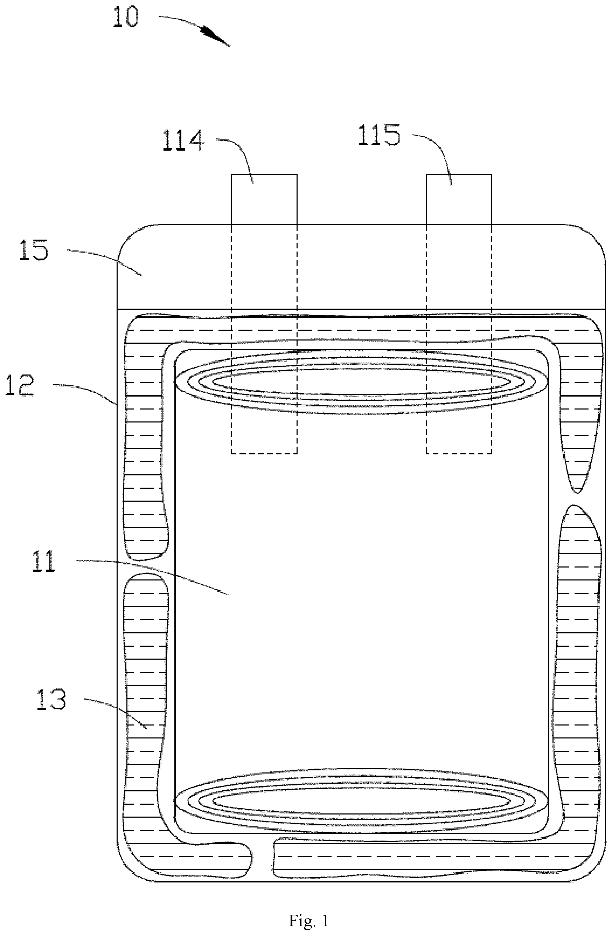

Referring to Fig. 1, an embodiment of the application provides a cell 10. The cell 10 includes an electrode assembly 11, a package 12 that receives the electrode assembly 11 and an electrolyte solution 13. The electrolyte solution 13 is received into the package 12. The electrolyte solution 13 may include some common organic solvents, including ethylene carbonate, propylene carbonate, ethyl methyl carbonate and diethyl carbonate.

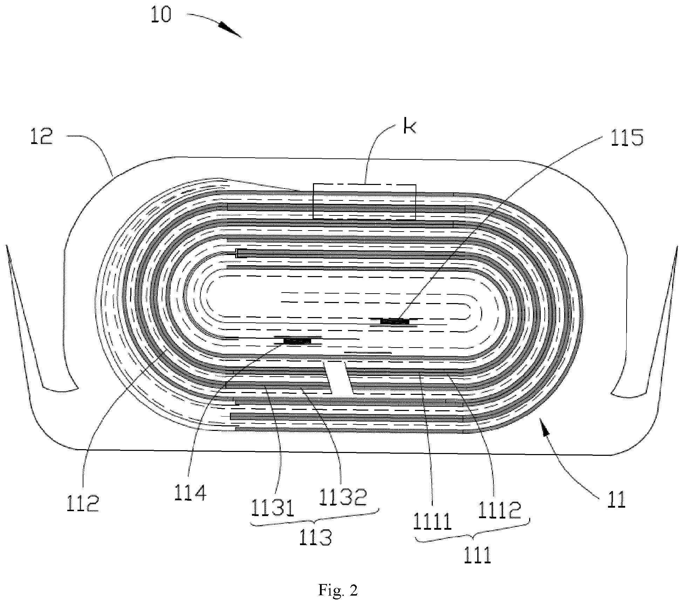

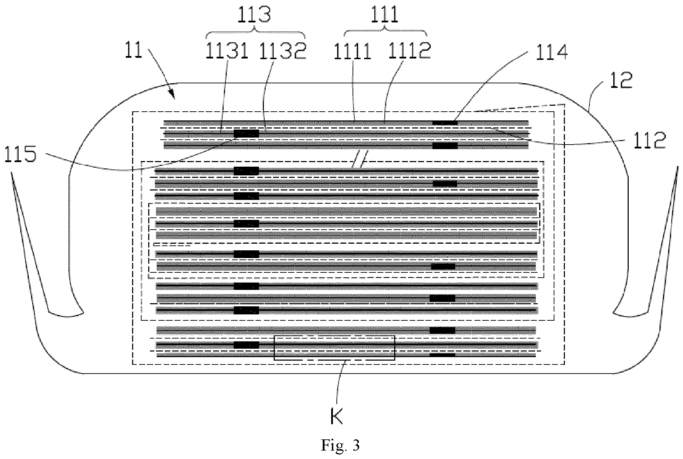

Referring to Figs. 2 and 3, the electrode assembly 11 is formed by sequential winding or stacking of a cathode plate 111, a separator 112 and an anode plate 113. The cathode plate 111 includes a first current collector 1111 and a first active substance layer 1112 arranged on the first current collector 1111.

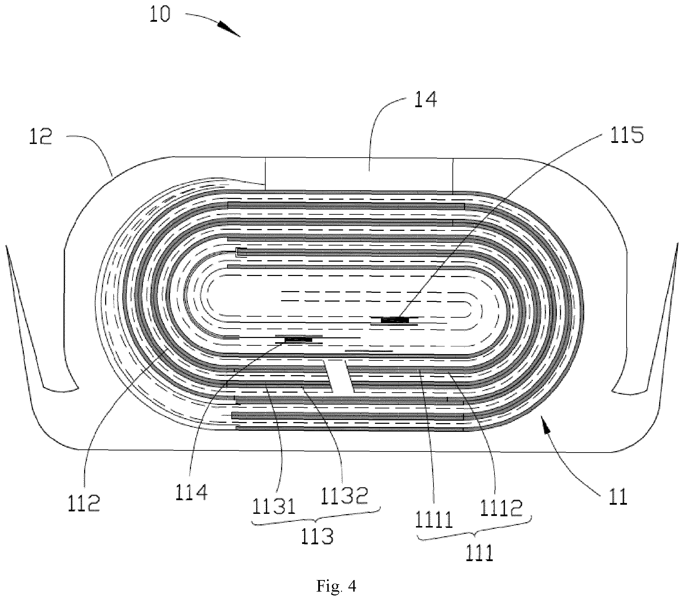

Furthermore, referring to Fig. 4, the cell 10 further includes an adhesive member 14. The adhesive member 14 is arranged between the package 12 and the electrode assembly 11 to connect the package 12 to the electrode assembly 11, which can improve the rigidity of the cell 1 0. In this way, even if the cell 10 drops or is impacted, the package 12 and the electrode assembly 11 will not be displaced relatively. Hence, the package 12 will not be impacted by the electrode assembly 11 to break through the package 12 to cause leakage of the cell 10.

Furthermore, referring to Fig. 1, the cell 10 further includes a first sealed edge 15. A part of the electrode assembly 11 penetrates through the first sealed edge 15. In this embodiment, the electrode assembly 11 further includes a cathode tab 114 connected with the cathode plate 111 and an anode tab 115 connected with the anode plate 113. The first sealed edge 15 penetrates through the cathode tab 114 and the anode tab 115, respectively. The first sealed edge 15 extends through one side of the package 12. The first sealed edge 15 is part of the package 12.

In some embodiments, a transverse strength of the first current collector 1111 is 50 MPa ~ 300 MPa. A longitudinal strength of the first current collector 1111 is 50 MPa ∼ 300 MPa. The first current collector 1111 includes one or more of elements, including Al, Ni, Mn, Cr, Cu, Fe, Mg, Si, Ti, Zr, V, Zn, Pb, S, P, Sn, As, Bi and Sb. Elements in the first current collector 1111 can be tested by an inductively coupled plasma-optical emission spectrometry (ICP-OES).

In some embodiments, the first active substance layer 1112 includes a first active substance and a first adhesive agent. A mass fraction of the first active substance is 96% ~ 99%. A mass fraction of the first adhesive agent is 0.5% ~ 2%. The first adhesive agent can be selected from, but not limited to one or more of copolymers of polyethylene oxide, polyvinylidene fluoride, butadiene styrene rubber, vinylidene difluoride and hexafluoropropylene. Monomer products, produced from a test for the first adhesive agent by a pyrolysis gas chromatography mass spectroscopy (PY-GCMS), include one or more of butadiene, acrylonitrile, styrene, methyl methacrylate, butyl acrylate, vinyl pyrrolidone, ethylhexyl methacrylate, iso-octyl acrylate, polyvinylidene fluoride, 9-octadecenenitrile, propyl propionate, ethyl propionate, polyacrylic acid (PAA), N-methylpyrrolidone and 4-phenylcyclohexanone.

In some embodiments, the first active substance layer 1112 includes a conductive agent. A mass fraction of the conductive agent is 0.5% ~ 2%. The conductive agent can be selected from, but not limited to one or more of acetylene black, carbon black, conductive carbon black (Super P), Ketjen black, single-walled carbon nanotube, multi-walled carbon nanotube, carbon nanofiber and graphene.

In this embodiment, the cathode plate 111, the anode plate 113 adjacent to the cathode plate 111 and two layers of the separator 112 adjacent to the cathode plate 111 or the anode plate 113 (referring to a K area in Fig. 2, or referring to a K area in Fig. 3) are defined as one layer of the electrode assembly 11. A thickness a (in mm) of the first current collector 1111 satisfies the following formula: 0.02T/(L+2)≤a≤0.06T/L+b×S/1000, which is calculated by the numerical values of various parameters. In this formula, T is a thickness of the cell 10 (in mm), b is a content of the free electrolyte solution 13 (in g/Ah), S is an encapsulation strength of the first sealed edge 15 (in N/m), and L is a number of layers of the electrode assembly 11.

In this embodiment, a thickness T of the cell 10 is 1 mm ~ 12 mm. In this embodiment, a thickness T of the cell 10 is 3 mm ~ 6 mm. In another embodiment, a thickness T of the cell 10 is 1 mm ~ 5 mm. In another embodiment, a thickness T of the cell 10 is 2 mm ~ 10 mm.

In this embodiment, a thickness a of the first current collector 1111 is 0.005 mm ∼ 0.03 mm. In one embodiment, a thickness a of the first current collector 1111 is 0.005 mm ∼ 0.02 mm. In another embodiment, a thickness a of the first current collector 1111 is 0.008 mm ∼ 0.14 mm.

In this embodiment, a content b of the free electrolyte solution 13 is 0.05 g/Ah ~ 1.6 g/Ah. In one embodiment, a content b of the free electrolyte solution 13 is 0.05 g/Ah ~ 0.5 g/Ah. In another embodiment, a content b of the free electrolyte solution 13 is 0.05 g/Ah ~ 1.0 g/Ah. In a yet embodiment, a content b of the free electrolyte solution 13 is 0.05 g/Ah ∼ 0.3 g/Ah.

In this embodiment, an encapsulation strength of the first sealed edge 15 is 0.5 N/m ∼ 20 N/m. In one embodiment, an encapsulation strength S of the first sealed edge 15 is 1 N/m ∼ 10 N/m. In another embodiment, an encapsulation strength S of the first sealed edge 15 is 2 N/m ∼ 8 N/m.

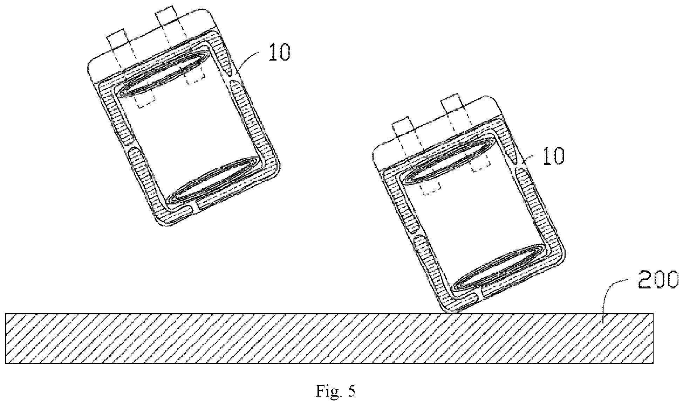

Referring to Fig. 5, when the cell 10 drops from a high, the speed directions of the free electrolyte solution 13, the package 12 and the electrode assembly 11 are consistent with a dropping direction of the cell 10 during the drop, while the cell 10 will bounce at the moment when the cell 10 touches the ground 200. In this way, the speed directions of the package 12 and the electrode assembly 11 are changed to be opposite to the dropping direction of the cell 10 at the moment when the package 12 integrally connected with the adhesive member 14 and the electrode assembly 11 touch the ground 200. However, the speed direction of the free electrolyte solution 13 is still consistent with the dropping direction of the cell 10 due to an inertia effect. Thus, the package 12 and the electrode assembly 11 will be reversely scoured by the free electrolyte solution 13, and such reverse scouring will damage an internal structure of the cell 10 (for instance: the package 12 and the electrode assembly 11), and thus cause leakage, short circuit and fire when the cell 10 drops, so as to affect the using safety of the cell. In this way, the content of the free electrolyte solution 13 can be defined to alleviate the reverse scouring of the electrolyte solution 13 for the internal structure of the cell 13 under the premise of ensuring enough electrolyte solution 13 for the cell 10 during the long-time cycle use thereof, thereby improving the anti-drop performance of the cell 10 in disguised form and ensuring the safety of the cell 10 during the drop. Besides, the reverse scouring of the free electrolyte solution 13 will further damage an encapsulation area of the cell 10, for instance, an area of the first sealed edge 15. Besides, due to the fact that the electrode assembly 11 and the package 12 are connected by the adhesive member 14, an adhesion area between the electrode assembly 11 and the package 12 will be reversely scoured to severely damage the cathode plate 111 by the free electrolyte solution 13 continuously in a repeated drop of the cell 10. In this way, under the premise of defining the content of the free electrolyte solution 13, while the thickness and energy capacity of the cell 10 are ensured, the thickness a of the first current collector 1111 and the encapsulation strength S of the first sealed edge 15 are further defined to ensure the structural integrity of the cell during the drop, thereby effectively preventing leakage, short circuit and fire of the cell 10 due to the drop or impact.

Referring to Figs. 2 and 3, the anode plate 113 includes a second current collector 1131 and a second active substance layer 1132 arranged on the second current collector 1131.

In some embodiments, the second active substance layer 1132 includes a second active substance and a second adhesive agent. A mass fraction of the second active substance is 97% ∼ 99%. A mass fraction of the second adhesive agent is 0.5% ∼ 1.5%. Monomer products, produced from a test for the second adhesive agent by a pyrolysis gas chromatography mass spectroscopy (PY-GCMS), include one or more of butadiene, acrylonitrile, styrene, methyl methacrylate, butyl acrylate, vinyl pyrrolidone, ethylhexyl methacrylate, iso-octyl acrylate, polyvinylidene fluoride, 9-octadecenenitrile, propyl propionate, ethyl propionate, polyacrylic acid (PAA), N-methylpyrrolidone and 4-phenylcyclohexanone.

In some embodiments, the separator 112 includes one or more of polyethylene, polypropylene, polyvinylidene fluoride, modified polyvinylidene fluoride, polyacrylate, modified polyacrylate, modified polyethylene, and modified polypropylene. In some embodiments, the adhesive force between the separator 112 and the cathode plate 111 is 0.5 N/m ∼ 80 N/m, and the adhesive force between the separator 112 and the anode plate 113 is 0.5 N/m ∼ 40 N/m. In this way, exposure of the cathode plate 111 and the anode plate 113 caused by reverse scouring of the free electrolyte solution 13 to damage the separator 112 can be prevented effectively.

The following paragraphs will elaborate the cell 10 of the application by virtue of embodiments and contrast Examples.

### Embodiment 1

Referring to Figs. 1 and 4, the cell 10 includes the electrode assembly 11, the package 12 that receives the electrode assembly 11, the electrolyte solution 13, the adhesive member 14 and the first sealed edge 15. The electrolyte solution 13 is received into the package 12. The adhesive member 14 is arranged between the package 12 and the electrode assembly 11. The first package 15 extends from one side of the sealed edge 12. The first sealed edge 15 is a part of the package 12.

The electrode assembly 11 is formed by the sequential winding of the cathode plate 111, the separator 112 and the anode plate 113. The cathode plate 111 includes a first current collector 1111 and a first active substance layer 1112 arranged on the first current collector 1111. In Embodiment 1, the electrode assembly 11 further includes a cathode tab 114 connected with the cathode plate 111 and an anode tab 115 connected with the anode plate 113. The first sealed edge 15 penetrates through the cathode tab 114 and the anode tab 115, respectively.

In this embodiment, a thickness T of the cell 10 is 5.2 mm. A number L of layers of the electrode assembly 11 is 15. An encapsulation strength S of the first sealed edge 15 is 4.2 N/m. A content b of the free electrolyte solution 13 is 1.0 g/Ah. A thickness a of the first current collector 1111 is 0.014 mm. In embodiment 1, a thickness a of the first current collector 1111 satisfies the following formula: 0.02T/(L+2)≤a≤0.06T/L+b×S/1000, which is calculated by the numerical values of various parameters.

A content b of the free electrolyte solution 13 is tested by a differential weight method. The differential weight method includes the following steps:
Firstly, shearing a hole in an encapsulation area at the top of the cell 10, and inversely placing the same in a centrifugal pipe (not shown); and then centrifuging for 20 min at a speed of 3,000 rpm/min; next, stopping a centrifugal operation after continuously repeating the aforesaid centrifugal operation steps till the weight loss of the cell 10 is less than 0.01 g after the two adjacent centrifugal operations; and lastly, measuring all electrolyte solutions 13 obtained from the centrifugal pipe, wherein the weight tested is m, wherein an actual capacity of the cell 10 is defined as n, and the content b of the free electrolyte solution is equal to m/n.

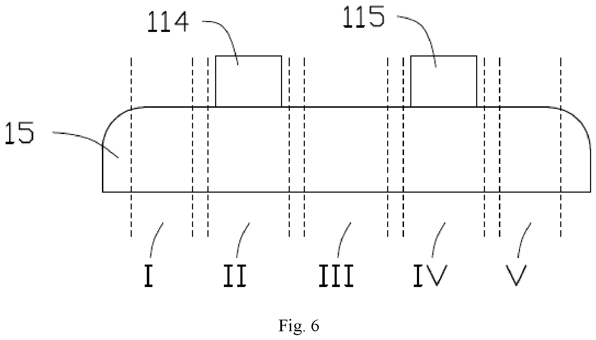

The encapsulation strength S of the cell 10 in Embodiment 1 is tested. The method for testing the encapsulation strength S of the first sealed edge 15 includes the following steps:
Firstly, disassembling the cell 10, taking five parts of an area of the first sealed edge 15 shown in Fig. 6 to make samples, including sample I, sample II, sample III, sample IV and sample V shown in Fig. 6; next, respectively clamping the upper and lower surfaces of every sample by upper and lower clamps (not shown), and then using a tensile tester (not shown) to stretch; and then, recording a tensile force of each sample stretched to be broken, wherein tensile strength of the sample = tensile strength when the sample is broken / width of the sample; and lastly, taking a minimum value of the tensile strength among the five samples as an encapsulation strength S of the first sealed edge 15.

The cell 10 in Embodiment 1 is subject to a drop test (a general test method is applied). The drop test includes the following steps:
Firstly, charging the cell 10 to be in a 100% stage of charge (SOC) at a room temperature (25°C); wherein a voltage of the cell 10 is 4.4V; next, placing the cell 10 in a clamp (not shown), bonding a back of the cell 10 to the clamp by an adhesive tape, and then screwing down a screw on the clamp, wherein the top and bottom surfaces of the clamp provided with the cell 10 are numbered as A and B, and the right upper, right lower, left upper and left lower corners of the clamp provided with the cell 10 are sequentially numbered as C, D, E and F; then, sequentially dropping the clamp provided with the cell 10 from a 1.8 m high test board (not shown) to a granite surface in a sequence of numbers A through F, and circulating five times in total, namely 30 times of drop (angles 45°±15°); and lastly, observing the cell 10 after standing for 24 h, wherein the cell 10 is determined to pass the drop test, if the cell 10, after being subject to the drop test, has no leakage, fire or explosion phenomenon. In Embodiment 1, a pass rate of the cell 10 is 100% in the drop test.

The cell 10 in Embodiment 1 is subject to a tumbling test. The tumbling test includes the following steps:
Firstly, charging the cell 10 to be in a 100% stage of charge (SOC) at a room temperature (25°C); wherein a voltage of the cell 10 is 4.4V; next, placing the cell 10 in a clamp (not shown), bonding a back of the cell 10 to the clamp by an adhesive tape, and then screwing down a screw on the clamp, and then, placing the clamp provided with the cell 10 into a tumbling tester for test, and standing for 24 h after the test, wherein a tumbling speed is 7 circles / min, and a drop height is 1m, totaling 1,000 times; and the cell 10 is determined to pass the drop test if the cell 10, after being subject to the tumbling test, has no leakage, fire or explosion. In Embodiment 1, a pass rate of the cell 10 is 100% in the tumbling test.

### Embodiment 2

Embodiment 2 differs from Embodiment 1 in that the content b of the free electrolyte solution 13 in Embodiment 2 is 0.8 g/Ah. The thickness a of the first current collector 1111 is 0.012 mm. In Embodiment 2, the thickness a of the first current collector 1111 also satisfies the above-mentioned formula:

### Embodiment 3

Embodiment 3 differs from Embodiment 1 in that the number L of layers of the electrode assembly 11 in Embodiment 3 is 18. An encapsulation strength S of the first sealed edge 15 is 6.8 N/m. A content b of the free electrolyte solution 13 is 0.6 g/Ah. A thickness a of the first current collector 1111 is 0.006 mm. In Embodiment 3, the thickness a of the first current collector 1111 also satisfies the above-mentioned formula.

### Embodiment 4

Embodiment 4 differs from Embodiment 3 that the number L of layers of the electrode assembly 11 in Embodiment 3 is 17. A thickness a of the first current collector 1111 is 0.014 mm. In Embodiment 4, the thickness a of the first current collector 1111 also satisfies the above-mentioned formula.

### Embodiment 5

Embodiment 5 differs from Embodiment 1 in that the electrode assembly 11 in Embodiment 5 is formed by the sequential stacking of the cathode plate 111, the separator 112 and the anode plate 113.

### Embodiment 6

Embodiment 6 differs from Embodiment 2 in that the electrode assembly 11 in Embodiment 6 is formed by the sequential stacking of the cathode plate 111, the separator 112 and the anode plate 113.

### Embodiment 7

Embodiment 7 differs from Embodiment 3 in that the electrode assembly 11 in Embodiment 7 is formed by the sequential stacking of the cathode plate 111, the separator 112 and the anode plate 113.

### Embodiment 8

Embodiment 8 differs from Embodiment 4 in that the electrode assembly 11 in Embodiment 8 is formed by the sequential stacking of the cathode plate 111, the separator 112 and the anode plate 113.

### Contrast Example 1

Contrast Example 1 differs from Embodiment 1 in that the encapsulation strength S of the first sealed edge 15 in Embodiment 1 is 1.7 N/m. A thickness a of the first current collector 1111 is 0.005 mm. In Contrast Example 1, a thickness a of the first current collector 1111 does not satisfy the above-mentioned formula. In Contrast Example 1, the pass rate of the cell 10 is 30% in the drop test, and the pass rate of the cell 10 is 60% in the tumbling test.

### Contrast Example 2

Contrast Example 2 differs from Embodiment 5 in that the encapsulation strength S of the first sealed edge 15 in Contrast Example 2 is 1.7 N/m. A thickness a of the first current collector 1111 is 0.005 mm. In Contrast Example 2, a thickness a of the first current collector 1111 does not satisfy the above-mentioned formula. In Contrast Example 2, the pass rate of the cell 10 is 30% in the drop test, and the pass rate of the cell 10 is 60% in the tumbling test.

The preparation conditions and corresponding test results of Embodiments 1-8 and Contrast Examples 1-2 are listed in Table 1 below.

**Table 1 Preparation Conditions and Corresponding Test Results of Embodiments 1-8 and Contrast Examples 1-2**

| | Type of cell | Thicknes s of cell, T (mm) | Number of layers of electrode assembly , L (layer) | Thicknes s of first current collector, a (mm) | Encapsulatio n strength of the first sealed edge, S (N/m) | Content of the free electrolyt e solution, b (M) | Whether to satisfy the relational expressio n of the thickness a of the first current collector | Pass rate of drop test | Pass rate of tumblin g test |
|---|---|---|---|---|---|---|---|---|---|
| Embodimen t 1 | Wound | 5.2 | 15 | 0.014 | 4.2 | 1.0 | Yes | 100 % | 100% |
| Embodimen t 2 | Wound | 5.2 | 15 | 0.012 | 4.2 | 0.8 | Yes | 100 % | 100% |
| Embodimen t 3 | Wound | 5.2 | 18 | 0.006 | 6.8 | 0.6 | Yes | 100 % | 100% |
| Embodimen t4 | Wound | 5.2 | 17 | 0.014 | 6.8 | 0.6 | Yes | 100 % | 100% |
| Embodimen t 5 | Laminate d | 5.2 | 15 | 0.014 | 4.2 | 1.0 | Yes | 100 % | 100% |
| Embodimen t6 | Laminate d | 5.2 | 15 | 0.012 | 4.2 | 0.8 | Yes | 100 % | 100% |
| Embodimen t 7 | Laminate d | 5.2 | 18 | 0.006 | 6.8 | 0.6 | Yes | 100 % | 100% |
| Embodimen t 8 | Laminate d | 5.2 | 17 | 0.014 | 6.8 | 0.6 | Yes | 100 % | 100% |
| Contrast Example 1 | Wound | 5.2 | 15 | 0.005 | 1.7 | 1.0 | No | 30% | 60% |
| Contrast Example 2 | Laminate d | 5.2 | 15 | 0.005 | 1.7 | 1.0 | No | 30% | 60% |

It can be seen, from Table 1 and the comparison between Embodiment 1 and Contrast Example 1, that the thickness a of the first current collector 1111 in Embodiment 1 is greater than that in Contrast Example 1, the encapsulation strength S of the first sealed edge 15 in Embodiment 1 is stronger than that in Contrast Example 1, the pass rate of the cell 10 in the drop test in Embodiment 1 is increased by 70% compared with Contrast Example 1, and the pass rate of the cell 10 in the tumbling test in Embodiment 1 is increased by 40% compared with Contrast Example 1. As can be seen, when the thickness T of the cell 10, the number L of layers of the electrode assembly 11 and the content b of the electrolyte solution 13 are certain, the pass rates of the cell 10 in the drop and tumbling test are affected by the thickness a of the first current collector 1111 and the encapsulation strength S of the first sealed edge 15.

It can be seen, from the comparison between Embodiment 2 and Contrast Example 1, that the thickness a of the first current collector 1111 in Embodiment 2 is greater than that in Contrast Example 1, the encapsulation strength S of the first sealed edge 15 in Embodiment 2 is stronger than that in Contrast Example 1, the content b of the free electrolyte solution 13 in Embodiment 2 is lowered compared with Contrast Example 1, the pass rate of the cell 10 in the drop test in Embodiment 2 is increased by 70% compared with Contrast Example 1, and the pass rate of the cell 10 in the tumbling test in Embodiment 2 is increased by 40% compared with Contrast Example 1. As can be seen, when the thickness T of the cell 10 and the number L of layers of the electrode assembly 11 are certain, the pass rates of the cell 10 in the drop and tumbling test are affected by the thickness a of the first current collector 1111, the encapsulation strength S of the first sealed edge 15 and the content b of the electrolyte solution 13.

It can be seen from, Embodiments 1 and 5, Embodiments 2 and 6, Embodiments 3 and 7 and Embodiments 4 and 8, that the thickness T of the cell 10, the number L of layers of the electrode assembly 11, the encapsulation strength S of the first sealed edge 15, the content b of the free electrolyte solution 13 and the thickness a of the first current collector 1111 will not affect the overall mechanical performance of the cell 10 when the type of the cell 10 is changed under certain circumstances.

In conclusion, the damage to the cell 10 caused by reverse scouring of the electrolyte solution 13 is reduced by defining the content b of the free electrolyte solution 13. Meanwhile, the thickness a of the first current collector 1111 is defined in conjunction with the thickness T of the cell 10, the number L of layers of the electrode assembly 11 and the encapsulation strength S of the first sealed edge 15, so that b, T, L, S and a satisfy this relational expression, thereby ensuring a complete structure of the cell 10 during the drop, and thus effectively preventing the leakage, short circuit and fire of the cell 10 due to drop and impact, and improving the using safety of the cell.

Besides, the embodiments of the application further provide a battery. The battery includes a shell (not shown) and the cell 10. The cell 10 is received into the shell.

The above embodiments are merely used to illustrate, instead of limiting, the technical solution of the application. Although the application is elaborated with reference to the preferred embodiments, those of ordinary skill in the art should understood to amend or equivalently replace the technical solution of the application without departure from the spirit and essential characteristics thereof.

## Claims

1. A cell, comprising an electrode assembly, a package that receives the electrode assembly and an electrolyte solution, the electrolyte solution being received into the package, the electrode assembly being formed by sequential winding or stacking of a cathode plate, a separator and an anode plate; the cell comprising a first sealed edge, a part of the electrode assembly penetrating through the first sealed edge, and the cathode plate comprising a first current collector and a first active substance layer arranged on the first current collector, **characterized in that**
the anode plate, the cathode plate adjacent to the anode plate and two layers of the separator adjacent to the anode plate or the cathode plate are defined as one layer of the electrode assembly; a thickness a (in mm) of the first current collector satisfies the following formula:
0.02T/(L+2)≤a≤0.06T/L+b×S/1000, which is calculated by the numerical values of various parameters;
wherein T is a thickness of the cell (in mm), b is a content of the free electrolyte solution (in g/Ah), S is an encapsulation strength of the first sealed edge (in N/m), and L is a number of layers of the electrode assembly.

2. The cell according to claim 1, **characterized in that** a thickness of the cell is 1 mm ~ 12 mm.

3. The cell according to claim 1, **characterized in that** a thickness of the first current collector is 0.005 mm ~ 0.03 mm.

4. The cell according to claim 1, **characterized in that** a content of the free electrolyte solution is 0.05 g/Ah ∼ 1.6 g/Ah.

5. The cell according to claim 1, **characterized in that** an encapsulation strength of the first sealed edge is 0.5 N/m ~ 20 N/m.

6. The cell according to claim 1, **characterized in that** a transverse strength of the first current collector is 50 MPa ~ 300 MPa.

7. The cell according to claim 1, **characterized in that** a longitudinal strength of the first current collector is 50 MPa ~ 300 MPa.

8. The cell according to claim 1, **characterized in that** an adhesive force between the separator and the anode plate is 0.5 N/m ~ 40 N/m.

9. The cell according to claim 1, **characterized in that** an adhesive force between the separator and the cathode plate is 0.5 N/m ~ 80 N/m.

10. A battery, comprising a shell, **characterized in that** the battery comprises the cell according to any one of claims 1-9, and the cell is received into the shell.
